# EUROPÄISCHE PATENTANMELDUNG

(11) **EP 2 902 458 A1**
(43) Veröffentlichungstag der Anmeldung: **05.08.2015**
(21) Anmeldenummer: 15153010.2
(22) Anmeldetag: 29.01.2015
(51) Int. Cl.: C09D 133/00, C09D 5/02

(54) **Farblose, mit Kreide entfernbar beschreibbare Wandfarbe**

(30) Priorität: 04.02.2014 DE 202014100482 U
(71) Anmelder: P.A. Jansen GmbH u. Co., KG, 53474 Bad Neuenahr-Ahrweller (DE)
(72) Erfinder: Krebsbach, Heinrich, 53506 Hönningen (DE); Jakobs, Frank, 56746 Kempenich (DE); Frenken, Norbert, 41366 Schwalmtal (DE)
(74) Vertreter: Kiwit, Benedikt

(57) **Zusammenfassung**

Die vorliegende Erfindung bezieht sich auf eine farblose Wandfarbe, die mit Kreide entfernbar beschreibbar ist. Die erfindungsgemäße farblose Wandfarbe kann auf vielen verschiedenen Untergründen eingesetzt werden und eignet sich insbesondere als Dekorationsmittel oder als modernes Gestaltungsmittel bei der Gestaltung von Räumen.

## Beschreibung

Die vorliegende Erfindung bezieht sich auf eine farblose Wandfarbe, die mit Kreide entfernbar beschreibbar ist. Die erfindungsgemäße farblose Wandfarbe kann auf vielen verschiedenen Untergründen eingesetzt werden und eignet sich insbesondere als Dekorationsmittel oder als modernes Gestaltungsmittel bei der Gestaltung von Räumen.

Mit Kreiden beschreibbare Oberflächen sind dem Fachmann typischerweise aus dem Schulbereich oder von Maltafeln bekannt. Bei solchen Tafeln ist die Oberfläche der verwendeten Tafel typischerweise mit einer feuchtigkeitsresistenten, mit Kreide beschreibbaren und abwisch- oder abwaschbaren Folie oder Farbe beschichtet. Für solche Zwecke verwendete Farben sind üblicherweise deckend in grün oder schwarz eingefärbt. Farben aus diesem Bereich sind dem Fachmann auch unter dem Namen Schultafellack, Wandtafelfarbe, Tafelfarbe oder als Tafellack bekannt. Die Verwendung grüner oder schwarzer Farben für Wandtafeln ist dabei zumeist anwendungsbedingt, auch wenn sich in jüngerer Zeit verschiedene andere Farbtöne für die Beschichtung solcher Tafeln etabliert haben.

Leider sind solche auf dem Markt bekannten Wandtafelfarben nicht universell einsetzbar und auf die Beschichtung von flächigen Untergründen wie bspw. Tafeln oder Platten beschränkt. Ferner wird der Gesamteindruck des Raumes signifikant von einer solchen Tafel und der schwarzen oder grünen Farbe, ggf. auch anderen als Wandtafelfarbe vorgegebenen Farben geprägt, die mit bereits vorhandenen Raum und Farbkonzepten zumeist schlecht kompatibel sind. Dies setzt der kreativen Gestaltung eines Raumes meist zu enge Grenzen.

Wandtafelfarben oder derartige Beschichtungen erfordern ferner eine Beschreibbarkeit der Oberflächen mit Kreide, die mit üblichen Mitteln, wie bspw. Wasser oder trocken wieder entfernbar sein muss und daher bevorzugt abwaschbar ist. Eine solche Eignung erfordert jedoch spezielle Anforderungen an den Untergrund.

Dem Fachmann stellt sich daher die Aufgabe, eine Wandfarbe oder Wandtafelfarbe bereitzustellen, die den Gesamteindruck des Raumes nicht beeinflusst und dennoch alle Anforderungen an den Untergrund erfüllt und dabei dennoch unproblematisch eine darauf verwendete Kreide wieder entfernen lässt.

Die Aufgabe wird durch eine erfindungsgemäß beschriebene Wandfarbe gelöst. Bevorzugt ist diese erfindungsgemäße Wandfarbe eine farblose, mit Kreide entfernbar beschreibbare Wandfarbe, aufweisend:
- ein transparentes Bindemittel, vorzugsweise Acrylat,
- ein partikelförmiges, transparentes Extendermaterial, vorzugsweise Silikat,
- Wasser in einem Anteil zwischen 45 Gew. % und 65 Gew %, und
- ein organisches Lösungsmittel in einem Anteil zwischen 0,5 Gew % und 4 Gew %.

Die erfindungsgemäße Wandfarbe ist farblos. Farblos bedeutet im Zusammenhang mit der vorliegenden Erfindung bevorzugt, dass die Wandfarbe keinerlei Eigenfarbe aufweist und den Farbton einer damit behandelten Oberfläche nicht oder nicht wesentlich verändert. Dadurch empfindet der Betrachter beim Vergleich einer mit der erfindungsgemäßen Wandfarbe behandelten Oberfläche und einer unbehandelten Oberfläche keinen oder zumindest keinen wesentlichen Unterschied, insbesondere keine Farbtonänderung des damit behandelten Untergrundes.

Die erfindungsgemäße Wandfarbe ist ferner mit Kreide entfernbar beschreibbar, d.h. die erfindungsgemäße Wandfarbe ist mit Kreide beschreibbar, wobei sich die Kreide mit üblichen im Stand der Technik bekannten Mitteln wieder entfernen lässt, bevorzugt mit einer Flüssigkeit, wie bspw. Wasser, und/oder trocken. Kreide im Sinne der vorliegenden Beschreibung ist typischerweise eine handelsübliche Kreide, weiß oder farbig, wie sie im Schulbereich oder Freizeitbereich zum Beschriften von Oberflächen verwendet wird, bspw. Tafelkreide, Farbkreide, Wandkreide, Straßenkreide, etc., bspw. auch Schmincke Künstlerkreide, edding Window Marker 4095 farbton weiß, etc. Typischerweise ist die erfindungsgemäße Wandfarbe nicht für Ölkreiden vorgesehen. Solche Ölkreiden werden bevorzugt aus der Auswahl möglicher Kreiden ausgeschlossen.

Die erfindungsgemäße Wandfarbe enthält ein bevorzugt transparentes Bindemittel. Dieses bevorzugt transparente Bindemittel kann aus allen einem Fachmann im Stand der Technik bekannten und geeigneten Bindemitteln gewählt werden. Im Sinne der vorliegenden Erfindung sind solche transparenten Bindemittel üblicherweise bereits im flüssigen Zustand transparent und bleiben bevorzugt nach dem Auftragen und Trocknen auf einer Oberfläche transparent und/oder werden nach dem Auftragen und Trocknen auf einer Oberfläche transparent. Beispielsweise können solche erfindungsgemäß verwendeten Bindemittel beim Auftragen auf eine Oberfläche eine geringe oder ggf. keine Transparenz aufweisen, bspw. eine milchige Konsistenz aufweisen, die jedoch beim Trocknen transparent wird. Bevorzugt ist daher eine erfindungsgemäße Wandfarbe nach dem Trocknen farblos.

Für die erfindungsgemäße Wandfarbe werden bevorzugt Bindemittel verwendet, die transparent austrocknen. Solche Bindemittel werden typischerweise ausgewählt aus der Gruppe bestehend aus Acryl-haltigen Bindemitteln (Acrylat, Acrylharz), Epoxydhaltigen Bindemitteln, Polyurethan (PU)-haltigen Bindemitteln, und UREA-haltigen Bindemitteln, stärker bevorzugt aus Acryl-haltigen Bindemitteln (Acrylat, Acrylharz).

Besonders bevorzugt sind die erfindungsgemäß eingesetzten Bindemittel nichtvergilbend oder in nur sehr geringem Maße vergilbend. Der Grad der Vergilbung kann durch einen Fachmann bestimmt werden und wird üblicherweise durch die Verfärbung der erfindungsgemäßen transparenten Wandfarbe in gelbliche oder Gelbtöne oder andere Töne bestimmt. Der Begriff "nichtvergilbend" bedeutet daher bevorzugt im Sinne der Erfindung, dass keine solche oder zumindest keine signifikante Farbänderung oder Verfärbung während einer durchschnittlichen Nutzungsdauer der erfindungsgemäßen Wandfarbe auf einer Oberfläche auftritt.

Die erfindungsgemäße Wandfarbe enthält ferner ein Extendermaterial, bevorzugt ein transparentes, partikelförmiges Extendermaterial. Ein Extendermaterial im Sinne der vorliegenden Anmeldung ist bevorzugt ein Füllstoff oder Füllmittel, das geeignet ist, der erfindungsgemäßen Wandfarbe durch enthaltene Partikel des Extendermaterials eine gewünschte Rauigkeit zu vermitteln. Ein erfindungsgemäß eingesetztes Extendermaterial enthält daher bevorzugt Partikel in einer Anzahl und Größenordnung, die es ermöglichen, einen sichtbaren Abrieb einer auf der getrockneten Wandfarbe eingesetzten Kreide zu erzeugen.

Ein Extendermaterial im Sinne der vorliegenden Anmeldung ist bevorzugt transparent und/oder beeinflusst beim Auftrag und/oder der Verarbeitung der erfindungsgemäßen Wandfarbe die Transparenz der Wandfarbe nicht oder zumindest nicht signifikant.

Bevorzugt umfasst oder besteht das Extendermaterial aus Silikaten bzw. silikatischen Füllstoffen, Sand, Gesteinsmehl, Titandioxid, Quarzsand, Glas, etc.

Das Extendermaterial enthält typischerweise Partikel oder besteht typischerweise aus Partikeln des ausgewählten Materials. Solche Partikel des eingesetzten Extendermaterials haben üblicherweise einen mittleren Durchmesser D50 zwischen 50µm und 100µm, vorzugsweise zwischen 60µm und 80µm, noch mehr bevorzugt zwischen 65µm und 75µm. Die Partikelgröße des Extendermaterials kann durch einen Fachmann mittels einfacher im Stand der Technik bekannter Verfahren bestimmt werden, wie bspw. mittels Siebverfahren oder physikalischen Verfahren, z.B. durch Partikelgrößenbestimmung über Lichtstreuung.

In diesem Zusammenhang enthält die erfindungsgemäße Wandfarbe bevorzugt einen Festkörperanteil zwischen 35 Gew % und 45 Gew %, stärker bevorzugt zwischen 38 und 42 Gew %, am stärksten bevorzugt etwa einen Festkörperanteil von etwa 38, 39, 40, 41, 42 Gew %. Der Festkörperanteil wird typischerweise vor dem Trocknen der Wandfarbe bei einem wie unten angegebenen Lösemittelanteil bestimmt.

Die erfindungsgemäße Wandfarbe enthält ferner ein Lösemittel, typischerweise ausgewählt aus der Kombination bestehend aus Wasser und einem organischen Lösungsmittel. Typischerweise ist die erfindungsgemäße Wandfarbe dabei eine wasserbasierte Dispersion, bevorzugt eine Acrylatdispersion, deren Hauptbestandteil Wasser darstellt und deren Bindemittel Acrylate bzw. Acrylharz enthält.

Bevorzugt enthält die erfindungsgemäße Wandfarbe daher Wasser in einem Anteil zwischen 45 Gew. % und 65 Gew %, stärker bevorzugt zwischen 50 Gew. % und 60 Gew %, am stärksten bevorzugt zwischen 54 Gew. % und 58 Gew %, z.B. 54, 55, 56, 57 oder 58 Gew. %, jeweils gerechnet auf das Gesamtgewicht der erfindungsgemäßen Wandfarbe. Der Anteil an Wasser wird ebenfalls typischerweise vor dem Trocknen der Wandfarbe bestimmt.

Zusätzlich enthält die erfindungsgemäße Wandfarbe ein organisches Lösungsmittel, bevorzugt in einem Anteil zwischen 0,5 Gew % und 4 Gew %, stärker bevorzugt in einem Anteil zwischen 1,0 Gew. % und 3 Gew. %, am stärksten bevorzugt in einem Anteil zwischen 1,5 Gew. % und 2,5 Gew. %, z.B. in einem Anteil von 1,5, 2,0, oder 2,5 Gew. %, jeweils gerechnet auf das Gesamtgewicht der erfindungsgemäßen Wandfarbe. Der Anteil an organischem Lösungsmittel wird ebenfalls typischerweise vor dem Trocknen der Wandfarbe bestimmt.

Das organische Lösungsmittel kann typischerweise aus jedem geeigneten Lösungsmittel ausgewählt werden, das vorliegend geeignet ist, mit Wasser, dem gewünschten Bindemittel und dem partikelförmigen transparenten Extender eine Dispersion zu bilden. Das organische Lösungsmittel verdunstet bevorzugt beim Trocknungsvorgang zusammen mit dem im Lösemittel enthaltenen Wasser aus dem Produkt. Der Lösemittelanteil der erfindungsgemäßen Wandfarbe verdunstet dabei typischerweise vollständig oder zumindest zum wesentlichen Teil nach dem Auftragen der erfindungsgemäßen Wandfarbe auf einer Oberfläche und beim anschließenden Trocknen. Nach dem Trocknen verbleiben im getrockneten Produkt im Wesentlichen das Bindemittel sowie das partikelförmige, transparente Extendermaterial.

Geeignete organische Lösungsmittel werden hier, ohne darauf beschränkt zu sein, ausgewählt aus Alkohol, bevorzugt Alkanolen, bspw. Methanol, Ethanol, Propanol, Butanol, Isopropylalkohol, oder Aromaten, bspw. Xylol oder Toluol, Estern, Ethern, Aceton, etc., bevorzugt aus einer Kombination von mindestens einem Alkanol mit Glykolether. Die verwendeten Lösemittel und die erfindungsgemäße Wandfarbe entsprechen bevorzugt der Norm EN 71, Teil 3, zur Sicherheit von Spielzeug. Die erfindungsgemäße Wandfarbe beinhaltet bevorzugt nur einen limitierten Anteil an flüchtigen organischen Verbindungen (volatile organie compounds VOC), bevorzugt nicht mehr als 50 g/l VOC, besonders bevorzugt nicht mehr als 40 g/l VOC, oder noch stärker bevorzugt nicht mehr als 30 g/l VOC.

Wie zuvor beschrieben ist die erfindungsgemäße Wandfarbe ist bevorzugt eine Dispersion, bevorzugt wasserbasierte Acrylatdispersion. Diese Dispersion bzw. die erfindungsgemäße Wandfarbe kann vor dem Trocknen eine Viskosität aufweisen, die je nach Bedarf durch den Fachmann eingestellt werden kann. So kann die erfindungsgemäße Wandfarbe dünnflüssig oder dickflüssig sein, d.h. eine geringe oder hohe Viskosität aufweisen. Beispielsweise kann die erfindungsgemäße Wandfarbe als Farbe zum Streichen, Sprühen, Rollen, Spritzen, bspw. zur Verarbeitung mit dem Pinsel oder als sogenannte feste Farbe, verwendet werden. Bevorzugt ist die erfindungsgemäße Wandfarbe in streichfertigem Zustand eingestellt, besonders bevorzugt leicht thixotrop.

Die erfindungsgemäße Wandfarbe ist bevorzugt beständig gegen Alkalien (alkalibeständig), ferner bevorzugt wasserfest und ebenfalls bevorzugt abriebfest. Die erfindungsgemäße Wandfarbe trocknet ferner leicht, und ist typischerweise Staubtrocken nach ca. 0,5-1,5, z.B. etwa 1 Std. und überstreichbar nach ca. 4-8, bspw. etwa 6 Std., sowie nach ca. 10 bis 20 Std., bspw. etwa 16 Std., vollständig durchgetrocknet, jeweils bevorzugt bei einer üblichen Luftfeuchtigkeit von etwa 30 bis 60%. Nach etwa 35 bis 55 Stunden ist die erfindungsgemäße Wandfarbe bevorzugt beschreibbar, bevorzugt nach etwa 48 Stunden.

Die erfindungsgemäße Wandfarbe enthält ferner optional Additive. Additive können in diesem Zusammenhang jegliche geeignete Zusätze oder Additive darstellen, bspw. Entlüfter, Netzmittel, Rheologieadditive, bevorzugt in einer Konzentration von 0,01 bis 2 Gew.%, stärker bevorzugt von 0,05 bis 1 Gew.%, bspw. von 0,1 bis 0.5 Gew.%.

Die erfindungsgemäße Wandfarbe ist ferner für den Innen oder den Außenbereich geeignet. Für den Außenbereich können der erfindungsgemäßen Wandfarbe ferner UV-Stabilisatoren zugesetzt werden.

Beim Trocknen der erfindungsgemäßen Wandfarbe auf einer Oberfläche wird, insbesondere durch das Bindemittel, ein Trockenfilm erzeugt. Der Trockenfilm haftet bevorzugt auf einer mit der Wandfarbe behandelten Oberfläche. Dabei werden die nicht volatilen Bestandteile der erfindungsgemäßen Wandfarbe, bspw. das partikelförmige transparente Extendermaterial und ggf. nicht volatile Additive, wie hier beschrieben, im Trockenfilm eingeschlossen und/oder im Trockenfilm auf dieser Oberfläche verankert.

Die Dicke des beim Trocknen durch das Bindemittel erzeugten Trockenfilms beträgt bevorzugt zwischen 10µm und 40µm, vorzugsweise zwischen 17µm und 28µm, noch stärker bevorzugt zwischen 20 und 25 µm.

Der beim Trocknen erzeugte Trockenfilm wird typischerweise durch die zuvor beschriebenen Partikel des transparenten partikelförmigen Extendermaterials durchbrochen, so dass die Oberfläche des erzeugten Trockenfilms rau erscheint. Dies kann typischerweise einen Abrieb der auf einer solchen Oberfläche verwendeten Kreide erzeugen. In diesem Zusammenhang ragen die Partikel des Extendermaterials im Trockenfilm der Wandfarbe bevorzugt zwischen 30µm und 60µm, stärker bevorzugt zwischen 40µm und 50µm aus der Oberfläche des Trockenfilms des Bindemittels heraus.

Die erfindungsgemäße Wandfarbe weist ferner bevorzugt nach dem Trocknen eine matte Oberfläche auf.

Die erfindungsgemäße Wandfarbe kann weiterhin zur Beschichtung jeder gewünschten und geeigneten Oberfläche verwendet werden. Bevorzugt ist eine solche Oberfläche eine glatte Oberfläche. Eine Oberfläche im Sinne der vorliegenden Erfindung kann dabei bspw. eine Metall- oder Glasoberfläche sein, eine Kunststoffoberfläche, eine Holzoberfläche, eine Stein- oder Schieferoberfläche, eine Tonoberfläche, eine Keramikoberfläche, eine Gipsoberfläche, eine Tapete, eine mit einer weiteren Farbe beschichtete Oberfläche, etc. Geeignete Oberflächen und Einsatzbereiche finden sich beispielsweise im Haus und Heim, Büro, Gastronomie, Gewerbe, Industrie, Kindergärten, Schulen, etc. Beispielhafte Gegenstände mit solchen Oberflächen sind bspw. Wände, Glasflächen, Türen, Theken, Schreibtische, Tafeln, Boards, etc.

Auf eine solche Oberfläche, die mit der erfindungsgemäßen Wandfarbe beschichtet wurde, kann jede der hier beschriebenen Kreidesorten oder Stifte aufgebracht oder verwendet werden. Eine solche aufgebrachte Kreide oder Markierung ist dabei bevorzugt trocken oder feucht abwaschbar oder abwischbar.

Die vorliegende Erfindung stellt ferner ein Set bereit umfassend oder bestehend aus einer erfindungsgemäßen farblosen, mit Kreide entfernbar beschreibbaren Wandfarbe, sowie mindestens einer Kreide oder einem Kreidesortiment, sowie optional einen Schwamm. Die Kreide ist bevorzugt wie zuvor beschrieben, der Schwamm dient bevorzugt zum trockenen oder feuchten Abwischen oder Abwaschen der aufgetragenen Kreide von der erfindungsgemäßen getrockneten Wandfarbe.

## Patentansprüche

1. Farblose, mit Kreide entfernbar beschreibbare Wandfarbe, aufweisend:
- ein transparentes Bindemittel, vorzugsweise Acrylat,
- partikelförmiges, transparentes Extendermaterial, vorzugsweise Silikat,
- Wasser in einem Anteil zwischen 45 Gew. % und 65 Gew %, und
- ein organisches Lösungsmittel in einem Anteil zwischen 0,5 Gew % und 4 Gew %.

2. Wandfarbe nach Anspruch 1,
bei der das Bindemittel nichtvergilbend ist.

3. Wandfarbe nach einem der vorhergehenden Ansprüche,
wobei das Extendermaterial einen mittleren Durchmesser D₅₀ zwischen 50µm und 100µm, vorzugsweise zwischen 60µm und 80µm, noch mehr bevorzugt zwischen 65µm und 75µm aufweist.

4. Wandfarbe nach einem der vorhergehenden Ansprüche,
wobei die Dicke des Trockenfilms des Bindemittels zischen 10µm und 40µm, vorzugsweise zwischen 17µm und 28µm beträgt.

5. Wandfarbe nach einem der vorhergehenden Ansprüche,
wobei der Festkörperanteil zwischen 35 Gew % und 45 Gew % beträgt.

6. Wandfarbe nach einem der vorhergehenden Ansprüche,
wobei die Partikel des Extendermaterials im Trockenfilm der Wandfarbe zwischen 30µm und 60µm, vorzugsweise zwischen 40µm und 50µm aus der Oberfläche des Trockenfilms des Bindemittels herausragen.

7. Wandfarbe nach einem der vorhergehenden Ansprüche, aufgebracht auf einer bevorzugt glatten Oberfläche, bevorzugt ausgewählt aus einer Metall- oder Glas-Oberfläche, einer Kunststoffoberfläche, einer Holzoberfläche, einer Steinoder Schieferoberfläche, einer Tonoberfläche, einer Keramikoberfläche, einer Gipsoberfläche, einer Tapete, oder einer mit einer weiteren Farbe beschichteten Oberfläche.

8. Wandfarbe nach einem der vorhergehenden Ansprüche, wobei aufgebrachte Kreide trocken oder feucht abwischbar ist.

9. Wandfarbe nach einem der vorhergehenden Ansprüche, die nach dem Trocknen eine matte Oberfläche aufweist.

10. Set umfassend eine Wandfarbe nach einem der Ansprüche 1 bis 9, mindestens eine Kreide oder ein Kreidesortiment, sowie optional einen Schwamm.
